# EUROPÄISCHE PATENTANMELDUNG

(11) **EP 1 426 350 A2**
(43) Veröffentlichungstag der Anmeldung: **09.06.2004**
(21) Anmeldenummer: 03022797.9
(22) Anmeldetag: 11.10.2003
(51) Int. Cl.: C04B 28/14, C04B 24/08

(54) **Baustoffmischung und daraus herstelltes Bauelement sowie Verwendungen von Montanwachs**

(30) Priorität: 30.10.2002 DE 10250477
(71) Anmelder: Readymix AG, 40880 Ratingen (DE)
(72) Erfinder: Langer, Frank, Dr. -Ing, 40883 Ratingen (DE)
(74) Vertreter: Berkenbrink, Kai-Oliver

(57) **Zusammenfassung**

Die Erfindung betrifft eine Baustoffmischung, ein daraus erstelltes Bauelement sowie Verwendungen von Montanwachs.

## Beschreibung

Die Erfindung betrifft eine Baustoffmischung, ein daraus erstelltes Bauelement sowie Verwendungen von Montanwachs.

Baustoffmischungen sind Mischungen aus einem Bindemittel und weiteren Bestandteilen, unter anderem insbesondere Wasser oder einem anderen Plastifizierungsmittel.

Mit einem Plastifizierungsmittel angemachte Baustoffmischungen haben eine plastische oder sonstige formbare Konsistenz, so dass sie zu einem Bauteil beliebiger Gestalt geformt werden können.

Als Baustoffmischungen sind beispielsweise solche auf Basis Calciumsulfat (CaSO₄), und darunter insbesondere auf Basis eines Anhydritbinders oder eines Halbhydrates, insbesondere eines α-Halbhydrates, aber auch eines β-Halbhydrates bekannt.

Der Anhydrit beziehungsweise das α-Halbhydrat übernehmen in einer solchen Baustoffmischung die Funktion des Bindemittels.

Anhydrit, also kristallwasserfreies Calciumsulfat (CaSO₄), ist ebenso wie α-Halbhydrat, also kristallwasserhaltiges Calciumsulfat (CaSO₄ · ½ H₂O), ein nichthydraulisches Bindemittel.

Zur Erstellung einer Baustoffmischung aus Anhydrit, wird dieser vermahlen, mit einem Anreger versetzt und mit Wasser angemacht. Durch Wasseraufnahme bindet der Anhydritbinder zu Gipsdoppelhydrat (Calciumsulfat-Dihydrat; CaSO₄ · 2 H₂O) ab.

Zur Erstellung einer Baustoffmischung aus α-Halbhydrat, wird dieser vermahlen, mit einem Verzögerer versetzt und mit Wasser angemacht. Durch Wasseraufnahme bindet das α-Halbhydrat ebenfalls zu Gipsdoppelhydrat (Calciumsulfat-Dihydrat; CaSO₄ · 2 H₂O) ab.

Entsprechende Baustoffmischungen auf Basis Calciumsulfat (CaSO₄), also insbesondere auf Basis eines Anhydritbinders beziehungsweise eines α-Halbhydrates, haben sich grundsätzlich bewehrt. Sie lassen sich leicht formen und können insbesondere zur Erstellung von Estrichen, Putzen oder Wandbauplatten verwendet werden.

Nachteilig ist, dass Baustoffmischungen auf Basis CaSO₄ nicht zur Erstellung von Bauteilen verwendet werden können, die längere Zeit Feuchtigkeit oder freiem Wasser ausgesetzt sind, da die Festigkeit entsprechender Bauteil bei dauerndem Kontakt mit Feuchtigkeit sinkt.

Dadurch ist die Verwendung von Bauteilen, die aus Baustoffmischungen auf Basis CaSO₄ erstellt worden sind und die einer andauernden Feuchtigkeit ausgesetzt sein können, wie beispielsweise Bauteile an Bauwerken, die der Witterung ausgesetzt sind oder Bauteile in Nassräumen, zum Beispiel Schwimmbädern, entweder nur stark eingeschränkt möglich oder auch ganz unmöglich.

Der Erfindung liegt die Aufgabe zugrunde, eine Baustoffmischung auf Basis CaSO₄, insbesondere auf Basis eines Anhydritbinders oder eines α-Halbhydrates, zur Verfügung zu stellen, die auch zur Erstellung von Bauteilen verwendet werden kann, die andauernder Feuchtigkeit oder längerer Zeit Wasser ausgesetzt sind.

Zur Lösung der Aufgabe wird erfindungsgemäß eine Baustoffmischung mit den folgenden Bestandteilen vorgeschlagen:
- Calciumsulfat,
- Montanwachs und
- weiteren Bestandteilen.

Das Calciumsulfat kann insbesondere beispielsweise kristallwasserfrei (als Anhydrit) oder kristallwasserbehaftet (als Halbhydrat, insbesondere als α-Halbhydrat vorliegen). Selbstverständlich können kristallwasserfreie und kristallwasserbehaftete Calciumsulfat-Anteile auch nebeneinander in der Baustoffmischung vorliegen.

Montanwachs ist ein braunschwarzes, aus Braunkohle extrahiertes Produkt. Bisher wurde Montanwachs hauptsächlich entweder für die Herstellung von Kohlepapier oder, nach Reinigung zu einem farblosen bis gelben Produkt, als Reinigungs-, Gleit-, Beschichtungs- oder Farbmittel eingesetzt.

Auch die Beimischung von Montanwachs in Baustoffe ist bekannt. Dabei wurde Montanwachs zur Erzielung einer hohen Dichtheit Zementmischungen beigegeben, die für Hochdruckinjektionsverfahren oder Oberflächenabdichtungen eingesetzt wurden.

Der Erfindung liegt die überraschende Erkenntnis zugrunde, dass eine Baustoffmischung auf Basis Calciumsulfat zur Erstellung eines Bauteils, das auch unter andauernder Feuchteeinwirkung seine Festigkeit beibehält, verwendet werden kann, wenn die Baustoffmischung Montanwachs enthält. Die Beigabe von Montanwachs in eine Baustoffmischung auf Basis CaSO₄ führt damit zur Verbesserung der Wasserbeständigkeit (Hydrophobierung) eines aus dieser Baustoffmischung erstellten Bauteils.

Darüber hinaus wurde überraschenderweise festgestellt, dass die Festigkeit eines Bauteils, das aus einer CaSO₄ und Montanwachs enthaltenden Baustoffmischung erstellt ist, gegenüber einem Bauteil, das durch eine entsprechende, jedoch kein Montanwachs enthaltende Baustoffmischung erstellt ist, erhöht ist.

Die Erfindung betrifft damit zum einen auch die Verwendung von Montanwachs als Hydrophobierungsmittel für eine Baustoffmischung auf Basis von CaSO₄ und zum anderen die Verwendung von Montanwachs als Verfestigungsmittel für eine Baustoffmischung auf Basis von CaSO₄.

Unter 'Verfestigungsmittel wird anmeldungsgemäß ein Mittel verstanden, das die Festigkeit, insbesondere die Druckfestigkeit, eines aus einer Baustoffmischung, die das Verfestigungsmittel enthält, erstellten Bauteils gegenüber einem Bauteil, das aus der entsprechenden Baustoffmischung, die das Verfestigungsmittel nicht enthält, erhöht.

Die hydrophobierenden beziehungsweise verfestigenden Eigenschaften des erfindungsgemäß verwendeten Montanwachses beziehen sich entsprechend auf das aus der Baustoffmischung, die das Montanwachs enthält, erstellte Bauteil.

Ein 'Bauteil' im anmeldungsgemäßen Sinne ist ein Bauelement beliebiger Struktur, das aus einer Baustoffmischung erstellt wurde. Ein Bauteil kann damit zum einen beispielsweise ein geformter Körper, wie beispielsweise ein Stein, ein Formkörper oder eine Wandbauplatte sein. Zum anderen kann ein Bauteil jedoch beispielsweise auch ein ungeformtes Erzeugnis, wie beispielsweise eine Spritz- oder Füllmasse, ein Estrich oder ein sonstiges gegossenes oder gespritztes Erzeugnis sein.

Insbesondere die Verwendung der anmeldungsgemäßen Baustoffmischung zur Erstellung von Estrichen und Wandbauplatten für Nassräume, wie beispielsweise Bädern, hat sich als vorteilhaft erwiesen. Bisher mussten entsprechende Bauteile in der Regel aufwendig gegen Feuchtigkeit geschützt werden, da der ständige Kontakt der Bauteile mit Feuchtigkeit zum Festigkeitsverlust und schließlich zur Zerstörung der Bauteile geführt hätte.

Bauteile, die mittels einer CaSO₄ enthaltenden Baustoffmischung erstellt sind, können jedoch nunmehr wesentlich einfacher und umfangreicher in Nassräumen eingesetzt werden, wenn die Baustoffmischung erfindungsgemäß Montanwachs enthält.

Es wurde festgestellt, dass ein Bauteil, das aus einer Baustoffmischung auf Basis eines Zementes, insbesondere eines Portlandzementes, als Bindemittel erstellt wurde, ebenfalls eine höhere Festigkeit aufweist, wenn dieser Baustoffmischung Montanwachs zugegeben worden ist. Insoweit umfasst die Erfindung auch die Verwendung von Montanwachs als Verfestigungsmittel für eine Baustoffmischung auf Basis von Zement.

Der Anteil des Montanwachses in der Baustoffmischung ist grundsätzlich beliebig. Es kann vorgesehen sein, dass der Anteil an Montanwachs in der Baustoffmischung (bezogen auf den Anteil an CaSO₄) 0,5 bis 10 Gewichts-Prozent beträgt. Der Anteil an Montanwachs in der Baustoffmischung kann damit beispielsweise auch, wiederum bezogen auf den Anteil an CaSO₄, bei 0,5 bis 8 Gewichts-Prozent, bei 1 bis 5 Gewichts-Prozent oder beispielsweise bei 2 bis 4 Gewichts-Prozent liegen.

Neben CaSO₄ und Montanwachs kann die Baustoffmischung beliebige weitere Komponenten enthalten, beispielsweise wenigstens einen der folgenden Stoffe: Wasser, Anreger, Verzögerer, Zuschlagstoff, Zusatzstoff oder Zusatzmittel.

Der Anreger kann beispielsweise aus Kalkhydrat, Zement oder aus einer Kombination von wasserlöslichen Alkalimetallsalzen und Schwermetallsulfaten bestehen. Der Anteil an Anreger, wiederum bezogen auf den Anteil an CaSO₄ in der Baustoffmischung, kann beispielsweise zwischen 2 und 7 Gewichts-Prozent liegen.

Als Zuschlagstoffe können beispielsweise Sand, Kies oder sonstige schüttfähige Stoffe eingesetzt werden.

Zusatzstoffe können beispielsweise Steinmehle oder hydraulisch wirkende Bestandteile sein; durch diese kann beispielsweise die Geschmeidigkeit der frisch mit Wasser angemachten Baustoffmischung oder die chemische Beständigkeit der zu einem Bauteil erhärteten Baustoffmischung beeinflusst werden.

Durch die Zusatzstoffe, beispielsweise Verflüssiger und Erstarrungsverzögerer oder -beschleuniger, können die chemischen und physikalischen Eigenschaften der angemachten oder erhärteten Baustoffmischung beeinflusst werden, beispielsweise deren Verarbeitbarkeit, Wasseraufnahmefähigkeit oder Erstarrungszeit.

Das Montanwachs kann der Baustoffmischung auf beliebige Art und Weise und in beliebiger Form zugegeben werden.

Nach einer Ausführungsform ist die Verwendung des Montanwachses als Hydrophobierungsmittel beziehungsweise als Verfestigungsmittel für die Baustoffmischung auf Basis CaSO₄ mit der Maßgabe vorgesehen, dass das Montanwachs in einer wässrigen Dispersion vorliegt.

Diese Dispersion besteht aus dem in einem Dispergiermittel dispergierten Montanwachs und gegebenenfalls weiteren Bestandteilen, beispielsweise Tensiden, zum Beispiel anionischen Tensiden, oder Farbstoffen.

Dabei kann vorgesehen sein, dass der Anteil an Montanwachs in der Dispersion, bezogen auf den Anteil des Dispergiermittels, beispielsweise 30 bis 70 Gewichts-Prozent oder 40 bis 60 Gewichts-Prozent beträgt.

## Patentansprüche

1. Baustoffmischung mit folgenden Bestandteilen:
a. Calciumsulfat,
b. Montanwachs und
c. weiteren Bestandteilen.

2. Baustoffmischung nach Anspruch 1, in der das Calciumsulfat in Form wenigstens eines der folgenden Stoffe vorliegt: Anhydrit oder Halbhydrat.

3. Baustoffmischung nach Anspruch 1, in der der Anteil an Montanwachs, bezogen auf den Anteil an Calciumsulfat, 0,5 bis 10 Gewichts-Prozent, beträgt.

4. Baustoffmischung nach Anspruch 1, in der der Anteil an Montanwachs, bezogen auf den Anteil an Calciumsulfat, 0,5 bis 8 Gewichts-Prozent, beträgt.

5. Baustoffmischung nach Anspruch 1, in der der Anteil an Montanwachs, bezogen auf den Anteil an Calciumsulfat, 1 bis 5 Gewichts-Prozent, beträgt.

6. Baustoffmischung nach Anspruch 1, in der der Anteil an Montanwachs, bezogen auf den Anteil an Calciumsulfat, 2 bis 4 Gewichts-Prozent, beträgt.

7. Baustoffmischung nach Anspruch 1 mit wenigstens einem der folgenden weiteren Bestandteile: Wasser, Anreger, Verzögerer, Zuschlagstoffe, Zusatzstoffe oder Zusatzmittel.

8. Verwendung von Montanwachs als Hydropobierungsmittel für eine Baustoffmischung auf Basis von Calciumsulfat.

9. Verwendung von Montanwachs als Verfestigungsmittel für eine Baustoffmischung auf Basis von Calciumsulfat.

10. Verwendung von Montanwachs als Verfestigungsmittel für eine Baustoffmischung auf Basis von Zement.

11. Verwendung von Montanwachs nach wenigstens einem der Ansprüche 8 - 10 mit der Maßgabe, dass das Montanwachs in einer wässrigen Dispersion vorliegt.

12. Verwendung von Montanwachs nach Anspruch 11 mit der Maßgabe, dass der Anteil an Montanwachs in der Dispersion, bezogen auf den Anteil des Dispergiermittels, 30 bis 70 Gewichts-Prozent beträgt.

13. Verwendung von Montanwachs nach Anspruch 11 mit der Maßgabe, dass der Anteil an Montanwachs in der Dispersion, bezogen auf den Anteil des Dispergiermittels, 40 bis 60 Gewichts-Prozent beträgt.

14. Bauteil, erstellt mit einer Baustoffmischung nach Anspruch 1.
